# DEMANDE DE BREVET EUROPEEN

(11) **EP 1 043 522 A1**
(43) Date de publication de la demande: **11.10.2000**
(21) Numéro de dépôt: 00201219.3
(22) Date de dépôt: 04.04.2000
(51) Int. Cl.: F16J 15/02

(54) **Dispositif d'étanchéité notamment destiné au corps de pompes pour fluides spéciaux**

(30) Priorité: 08.04.1999 FR 9904506
(71) Demandeur: Norton Asti S.A., 92741 Nanterre (FR)
(72) Inventeur: Ménagé, Frédéric, Les Noyerats, 71000 Macon (FR)
(74) Mandataire: Richebourg, Michel François

(57) **Abrégé**

L'invention concerne un nouveau joint permettant de résoudre notamment le problème de la contamination de fluides spéciaux véhiculés dans des systèmes de transfert de fluides, et assurant de plus une meilleure étanchéité du fait de sa géométrie et de sa conception particulières.

Ledit joint 5 peut être en PTFE ainsi que la pièce d'appui 7 du soufflet 3 de la pompe, tandis que le corps de pompe 2 formant logement 4 du joint et exerçant une action de serrage est en un matériau moins déformable comme un PFA. De préférence, le joint présente une fente f de sécurité et une languette 10 dont la partie protubérante 60 est comprimée par la partie 50 du corps de pompe 2.

Applications notamment aux pompes pour fluides de l'industrie des semi-conducteurs.

## Description

La présente invention concerne le secteur technique des joints d'étanchéité compris dans les systèmes de transfert de fluides, et notamment de fluides spéciaux.

Par fluides spéciaux, on entend dans la présente demande des fluides requérant l'emploi de matériaux spéciaux. Un exemple non limitatif est donné par les fluides corrosifs. On désignera également sous ce vocable des fluides ne devant être en aucun cas contaminés par les composants de système de transfert. Un exemple non limitatif est fourni par certains fluides utilisés dans l'industrie des semi-conducteurs.

La présente invention concerne egalement le secteur technique des pompes pour fluides spéciaux utilisant de tels joints. Un exemple non limitatif est fourni par les pompes en matière fluorée.

Dans l'industrie des semi-conducteurs, on utilise couramment des fluides définis ici comme 〈〈 spéciaux 〉〉. Il peut s'agir notamment de bases, d'acides, de solvants, d'eau ou de fluides aqueux contenant des matières abrasives, et analogues bien connus de l'homme du métier.

Un problème technique d'une sévérité particulière est posé par la circulation de fluides tels que des acides qui sont ensuite utilisés pour graver les plaques de silicium servant à la production de semi-conducteurs. Toute pollution, et notamment toute pollution particulaire du fluide véhiculé, est totalement néfaste pour la qualité du semi-conducteur.

Cependant, les systèmes servant à véhiculer de tels fluides, et notamment les pompes et les tubulures, ont un besoin impératif de joints d'étanchéité, comme tout système de ce type.

On connaît dans ce domaine des joints toriques bien connus sous le vocable de 〈〈 O-ring 〉〉. Ces joints toriques sont, de manière connue, placés dans des gorges ou logements puis sont comprimés par un collet, ce qui assure l'étanchéité. Dans le cas d'un joint entre deux tubulures, le serrage est effectué par le moyen d'une bague de serrage. Dans le cas d'un corps de pompe, le serrage est assuré par une solution technique d'assemblage (tirants, bagues, vis...)

De tels joints, dans le secteur technique considéré, sont essentiellement constitués en matériaux élastomères. Ceux-ci sont cependant susceptibles de conduire à une contamination particulaire des fluides véhiculés. Ils présentent en effet une pureté notoirement insuffisante et peuvent libérer des particules métalliques ou autres, extrêmement dommageables dans les industries 〈〈 ultrapures 〉〉 comme l'industrie des semi-conducteurs.

Le problème se pose notamment avec acuité dans les pompes en matière fluorée telles que décrites ci-dessus, qui comportent des joints au niveau du corps de pompe, ainsi d'ailleurs qu'au niveau de tubulures devant être raccordées de manière étanche au moyen de joints.

L'invention concerne un nouveau joint permettant de résoudre les problèmes évoqués ci-dessus, notamment le problème de la contamination des fluides véhiculés, et assurant de plus une meilleure étanchéité du fait de sa géométrie et de sa conception particulières.

D'autres caractéristiques et avantages de l'invention apparaîtront mieux à la lecture de la description qui va suivre, et en se référant au dessin annexé, sur lequel :
- la figure 1 représente une vue en coupe d'un élément de pompe pour fluides spéciaux, notamment une pompe dite 〈〈 chimique ultrapure 〉〉 notamment pour l'industrie des semi-conducteurs, présentant un joint selon l'invention ;
- la figure 2 représente en coupe un agrandissement d'une partie de la figure 1, montrant un mode de réalisation du joint selon l'invention et les pièces qui l'entourent ;
- la figure 3 représente en coupe un mode de réalisation du joint selon l'invention tel qu'utilisé sur les figures 1 et 2.

Sur les figures annexées, les mêmes références ont les mêmes significations, qui sont les suivantes :
- 1: tubulure
- 2: corps de pompe
- 3: soufflet
- 4: logement du joint
- 5: joint selon l'invention
- 6: paroi extérieure
- 7: paroi d'étanchéité de la collerette du soufflet
- 10: languette du joint
- 20: partie large ou 〈〈 masse 〉〉 du joint
- 30: face du joint au contact de la paroi 7
- 40: face de la paroi 7 du soufflet en contact avec la face 30 du joint
- 50: partie intérieure du logement du joint, appartenant au corps 2 de la pompe
- 60: 〈〈 coin 〉〉 protubérant de la languette 10
- 70: partie extérieure du logement du joint, appartenant au corps 2 de la pompe
- F et flèche: sens de pression du fluide sur le système de joint
- T et flèches: sens d'application de la force de serrage comme par exemple (non limitatif) des tirants (〈〈 rods 〉〉)
- f: fente
- ep: épaisseur de la fente
- l: longueur de la fente f
- a: largeur du joint (rondelle) 5
- INT.: intérieur de la pompe (fluide sous pression)
- EXT.: extérieur de la pompe

Dans toute la présente demande, les abréviations ont les significations suivantes :
- PTFE: polytétrafluoroéthylène
- PFA: polyfluoroalkoxy
- FEP: résine fluor éthylène-propylène

Par commodité, les descriptions seront données, pour orienter les figures et leurs références numériques, par rapport à 〈〈 l'intérieur 〉〉 de la pompe et à, respectivement, 〈〈 l'extérieur 〉〉.

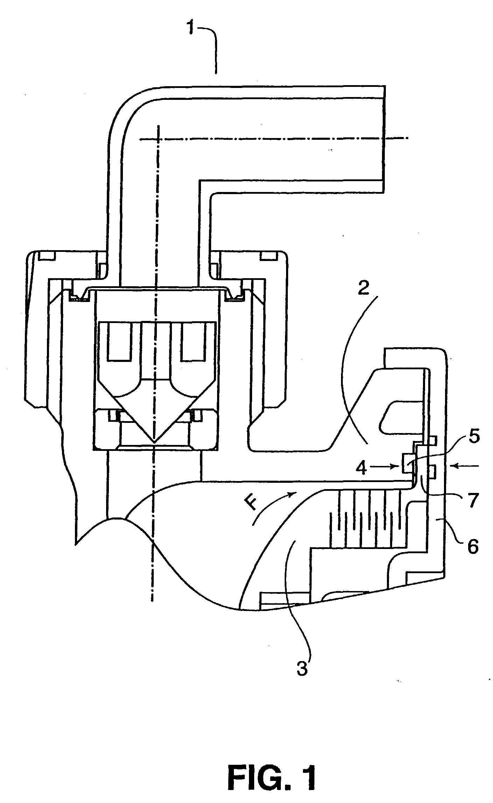

Comme on le voit sur la figure 1, un logement 4 est aménagé de manière connue dans le corps de pompe 2. Ce logement est délimité du côté 〈〈 intérieur 〉〉 de la pompe par la partie 50 du corps de pompe et du côté 〈〈 extérieur 〉〉 de la pompe par la partie 70 du corps de pompe. Le logement est fermé par la pièce 7 (collerette du soufflet 3).

La pièce 7 est serrée entre la pièce 6 et le corps de pompe 2.

L'étanchéité doit être assurée au niveau du joint 5 pour éviter les fuites de fluide F vers l'extérieur.

L'invention concerne de manière plus générale, à partir de l'exemple particulier du corps de pompe, un procédé d'étanchéification entre une pièce 2 comportant un logement contenant un joint 5, et une pièce 7 appliquée contre ledit joint, selon lequel on emploie un logement et un joint de section sensiblement carrée ou rectangulaire et on réalise un contact plan sur plan entre la face 30 du joint et la face 40 de la pièce 7 venant au regard de la face 30, et selon lequel le joint 5 et la pièce 7 appliquée sont constitués en un matériau relativement souple ou 〈〈 mou 〉〉, tandis que la pièce 2 est constituée en un matériau relativement dur.

L'avantage de réaliser le joint 5 et la pièce d'appui 7 vient du fait qu'il a été découvert selon l'invention que les deux matières relativement souples vont suffisamment se déformer au serrage pour que les inévitables défauts de surface se comblent ou s'écrasent, réalisant ainsi une excellente étanchéité.

Par 〈〈 relativement souple 〉〉, on désigne donc la capacité à subir cet écrasement des défauts de surface sans pour autant perdre les caractéristiques d'étanchéification. Par 〈〈 relativement dur 〉〉 on désigne les matériaux plus durs ou moins déformables capables de transmettre au mieux la force exercée par les tirants. L'homme de métier saura déterminer les matériaux appropriés pour créer un 〈〈 couple 〉〉 approprié de matériaux relativement souples ou mous et de matériaux relativement durs, à la lecture de la description et des exemples qui vont suivre, et à la lumière de ses propres connaissances.

L'invention concerne donc de manière générale un procédé d'étanchéification tel que décrit ci-dessus, caractérisé en ce que le joint 5 et la pièce 7 en matériau relativement souple sont suffisamment déformés au serrage pour que les défauts de surface se comblent ou s'écrasent.

Cette démarche est résolument originale dans la mesure où, dans l'art antérieur, on s'efforce toujours de comprimer un matériau relativement souple, par exemple un 〈〈 O-ring 〉〉 entre deux pièces dures. On pouvait craindre en effet qu'un contact plan sur plan entre deux matériaux relativement souples éventuellement identiques, ne produise pas l'étanchéité appropriée en raison de déformations incontrôlées des surfaces.

Selon une variante préférée de l'invention, le joint 5 et la pièce 7 appliquée sur le joint en contact plan sur plan sont réalisés dans le même matériau.

Selon un mode de réalisation préféré de l'invention, le matériau constitutif du joint 5 et de la pièce 7 est un PTFE. On peut envisager d'autres matériaux comme des métaux ou alliages déformables pour des applications spécifiques que l'homme de métier saura apprécier, ou encore un FEP ou un PFA modifiés ou adaptés pour présenter des caractéristiques similaires au PTFE.

Selon un mode de réalisation préféré de l'invention, le matériau constitutif de la pièce 2 est un PFA. On peut envisager de remplacer le PFA par un métal ou alliage plus dur ou moins déformable que le précédent.

Selon un mode particulier de réalisation, le PTFE est un PTFE commercialisé par Du Pont de Nemours sous le nom Teflon PTFE (TM), ou par AUSIMONT sous le nom ALGOFLON (TM).

Selon un mode particulier de réalisation, le PFA est un PFA commercialisé par Du Pont de Nemours sous le nom Teflon PFA (TM).

Les valeurs de résistance à la compression au seuil d'écoulement selon la norme ASTM D 695 sont respectivement de:
24 MPa pour le Teflon PFA (TM) et de 12 MPa pour le Teflon PTFE (TM).

Les valeurs de dureté Shore D selon la norme ASTM D 2240 sont respectivement de:
60 pour le Teflon PFA (TM) et de 55 pour le Teflon PTFE (TM).

Une FEP (résine fluor éthylène-propylène) présente une résistance à la compression de 15,2 MPa et une dureté Shore de 56 - 57, selon les mêmes normes.

Un PVDF (polyfluorure de vinylidène) présente à titre comparatif une résistance à la compression de 75 MPa et une dureté Shore de 77, selon les mêmes normes.

Ces valeurs permettront à l'homme de métier d'apprécier ce que l'on entend selon l'invention par 〈〈 relativement souple ou mou 〉〉 et 〈〈 relativement dur 〉〉, en relation avec la différence de valeur de résistance à la compression et du dureté Shore D qui, quoique semblant numériquement faible, est importante. L'homme de métier saura ainsi constituer les couples de matériaux appropriés, ainsi que déterminer les domaines acceptables de 〈〈 dureté 〉〉 et de 〈〈 souplesse 〉〉 relatives entre les deux matériaux.

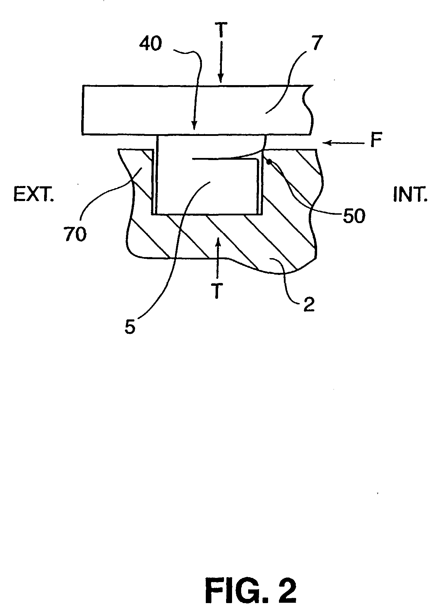

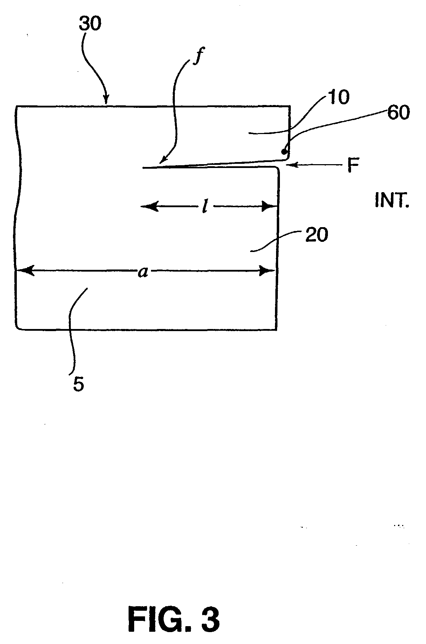

Selon un mode préféré de réalisation, et comme on le voit mieux sur les figures 2 et 3, le joint selon l'invention est une rondelle de section sensiblement carrée ou rectangulaire, qui comporte du côté 〈〈 intérieur 〉〉 INT. une fente f qui s'ouvre sur l'INT. en ménageant une languette 10 dans le joint 5, du côté de la pièce d'appui 7, mais ne traverse pas totalement la largeur de la rondelle 5.

De manière préférée, la longueur l de la fente représentera environ de 1/3 à 2/3 de la largeur totale a de la rondelle 5, de manière particulièrement préférée environ 2/3.

Selon ce mode de réalisation de l'invention, l'étanchéité est favorisée par la fente f. En effet, on voit que le fluide dispose de deux voies possibles celle entre la face 30 du joint et la face 40 , et celle entre la partie 50 de la pièce 2 et le coin intérieur 60 du joint 5.

Dans ce dernier cas, c'est à dire si le fluide s'insérait entre la pièce 2 (50) et le joint 5 (20), il pénétrerait sous pression dans la fente f et tendrait à ouvrir la fente créant ainsi une force d'étanchéité supplémentaire (face 30/face 40+5/2).

La fente f selon l'invention joue donc le rôle d'une seconde sécurité.

2ème rôle de la fente f: elle permet un positionnement libre de la partie 60 du joint 5 sans contrainte supplémentaire de flexion ou de cisaillement.

Celle démarche complémentaire est elle aussi originale dans la mesure où, dans l'art antérieur, on n'envisageait pas de créer une faille (ici, la fente f ) dans le joint précisément du côté où s'exerce la pression du fluide.

Selon encore un mode de réalisation de l'invention, la languette 10 du joint 5 comporte une partie 60 légèrement protubérante vers l'INT., c'est à dire que la partie 60 dépasse légèrement vers l' INT. la face 20 INT. du joint.

De cette manière, au serrage, la partie 50 de la pièce 2 va serrer la languette 10, par son extrémité protubérante 60, contre la face 40 de la pièce 7, ce qui réalise l' étanchéité.

De plus, ceci ouvre la fente f et favorise donc la pénétration du fluide dans ladite fente, dans l'hypothèse indiquée plus haut.

On citera à cet égard le brevet EP 0 295 479 qui décrit le pincement d'une rondelle 14 d'étanchéité par ses deux côtés. On voit que d'une part la rondelle ne comporte pas de fente ni de languette, et que d'autre part aucune étanchéification plan sur plan n'est réalisée. Par ailleurs, le document cité ne décrit aucune combinaison spéciale de dureté pour les pièces en présence. Enfin, il ne concerne pas les fluides spéciaux. Ce document ne décrit qu'une technique brutale de pincement simultané, par les deux côtés, d'une rondelle 14.

L'invention concerne donc également le procédé d'étanchéification tel que décrit ci-dessus, dans lequel la languette du joint comporte une partie intérieure 60 légèrement protubérante vers l'intérieur INT. de la pompe, et dans lequel la partie 50 de la pièce de serrage 2 vient serrer la languette 10 du joint contre la paroi 40 de la pièce 7, en serrant le coin intérieur 60 de ladite languette, comme on le voit sur la figure 2.

L'épaisseur ep de la languette 10 du joint 5 est suffisamment fine pour être souple et déformable. Déterminable facilement par l'homme de métier.

L'invention concerne encore les joints qui viennent d'être décrits, dans toutes leurs variantes.

L'invention concerne encore les applications du procédé selon l'invention et des joints selon l'invention dans toutes les industries présentant des critères rigoureux ou même drastiques d'étanchéification, comme les industries des semi-conducteurs, l'industrie électronique de manière générale, l'aéronautique et l'espace, l'industrie pharmaceutique, la chimie, les nouvelles technologies et analogues.

En particulier, l'invention concerne les systèmes de transfert de fluide destinés à véhiculer des fluides spéciaux, en particulier et à titre non limitatif comprenant des pompes et / ou tubulures, en particulier des fluides corrosifs, et/ou en particulier des fluides ne devant pas être contaminés par le joint d'étanchéité, caractérisées en ce qu'elles comportent au moins un système d'étanchéité tel que décrit ci dessus.

En particulier, comme dans l'exemple non limitatif indiqué ci dessus, le système d'étanchéité de la pompe est formé par un joint 5 placé dans un logement 4 ménagé dans le corps de pompe 2 et serré contre la collerette 7 du soufflet 3 de la pompe.

De préférence, le joint 5 sera muni dune fente f et donc d'une languette 10.

De préférence, la languette 10 comporte une partie légèrement protubérante 60, qui est serrée par la partie 50 du corps de pompe formant partie intérieure du logement 4 du joint 5.

L'invention concerne donc également les éléments suivants:
- Joint d'étanchéification entre une pièce 2 comportant un logement contenant ledit joint, et une pièce d'appui 7 appliquée contre ledit joint, caractérisé en ce que ledit joint est de section sensiblement carrée ou rectangulaire et on réalise un contact plan sur plan entre la face 30 du joint et la face 40 de la pièce 7 venant au regard de la face 30, et en ce que le joint 5 et la pièce 7 appliquée sont constitués en un matériau relativement souple.
- Joint d'étanchéification tel que décrit ci-dessus, caractérisé en ce que le joint 5 est suffisamment déformable au serrage pour que les défauts de surface se comblent ou s'écrasent.
- Joint d'étanchéification tel que décrit ci-dessus, caractérisé en ce que le matériau constitutif est un PTFE.
- Joint d'étanchéification tel que décrit ci-dessus, caractérisé en ce que le matériau constitutif est un autre polymère relativement mou comme un FEP ou un PFA modifiés ou adaptés pour présenter des caractéristiques similaires au PFTE, ou encore des métaux ou alliages relativement mous.
- Joint d'étanchéification tel que décrit ci-dessus, caractérisé en ce que le matériau constitutif en est un PTFE commercialisé par Du Pont de Nemours sous le nom Teflon PTFE (TM).
- Joint d'étanchéification tel que décrit ci-dessus, caractérisé en ce qu'il est constitué d'une rondelle de section sensiblement carrée ou rectangulaire, qui comporte du côté 〈〈 intérieur 〉〉 INT. une fente f qui s'ouvre sur l'INT. en ménageant une languette 10 dans le joint 5, du côté de la pièce d'appui 7, mais ne traverse pas totalement la largeur a de la rondelle 5.
- Joint d'étanchéification tel que décrit ci-dessus, caractérisé en ce que la longueur l de la fente f représentera environ de 1/3 à 2/3 de la largeur totale a de la rondelle 5, de manière particulièrement préférée environ 2/3.
- Joint d'étanchéification tel que décrit ci-dessus, caractérisé en ce que la languette 10 du joint 5 comporte une partie 60 légèrement protubérante vers l'INT., c'est à dire que la partie 60 dépasse légèrement vers l' INT. la face 20 INT. du joint.
- Applications du procédé et du joint tel que décrit ci-dessus dans toutes les industries présentant des critères rigoureux ou même drastiques d'étanchéification, comme les industries des semi-conducteurs, l'industrie électronique de manière générale, l'aéronautique et l'espace, l'industrie pharmaceutique, la chimie, les nouvelles technologies et analogues.
- Pompes destinées à véhiculer des fluides spéciaux, en particulier des fluides corrosifs, et/ou en particulier des fluides ne devant pas être contaminés par le joint d'étanchéité, caractérisées en ce qu'elles comportent au moins un joint d'étanchéité tel que décrit ci-dessus.
- Pompes destinées à véhiculer des fluides spéciaux, en particulier des fluides corrosifs, et/ou en particulier des fluides ne devant pas être contaminés par le joint d'étanchéité, caractérisées en ce que le système d'étanchéité de la pompe est formé par un joint 5 placé dans un logement 4 aménagé dans le corps de pompe 2 et serré contre la collerette 7 du soufflet 3 de la pompe.
- Pompes telles que décrites ci-dessus, caractérisées en ce que le joint 5 est constitué d'une rondelle de section sensiblement carrée ou rectangulaire, qui comporte du côté 〈〈 intérieur 〉〉 INT. une fente f qui s'ouvre sur l'INT. en ménageant une languette 10 dans le joint 5, du côté de la pièce d'appui 7.
- Pompes telles que décrites ci-dessus caractérisées en ce que la longueur l de la fente f représentera environ de 1/3 à 2/3 de la largeur totale a de la rondelle 5, de manière particulièrement préférée environ 2/3.
- Pompes telles que décrites ci-dessus caractérisées en ce que la languette 10 du joint 5 comporte une partie 60 légèrement protubérante vers l'INT., c'est à dire que la partie 60 dépasse légèrement vers l' INT. la face 20 INT. du joint.
- Applications des pompes telles que décrites ci-dessus dans toutes les industries présentant des critères rigoureux ou même drastiques d'étanchéification, comme les industries des semi-conducteurs, l'industrie électronique de manière générale, l'aéronautique et l'espace, l'industrie pharmaceutique, la chimie, les nouvelles technologies et analogues.

L'invention concerne encore les variantes de mise en oeuvre, de réalisation, de sélection des matériaux, et des applications et utilisations qui seront directement accessibles à l'homme de métier à la lecture de la présentedescription.

## Revendications

1. Procédé d'étanchéification entre une pièce 2 comportant un logement contenant un joint 5, et une pièce 7 appliquée contre ledit joint caractérisé en ce que l'on emploie un logement de joint et un joint de section sensiblement carrée ou rectangulaire et on réalise un contact plan sur plan entre la face 30 du joint et la face 40 de la pièce 7 venant au regard de la face 30, et en ce que le joint 5 et la pièce 7 appliquée sont constitués on un matériau relativement souple ou 〈〈 mou 〉〉, tandis que la pièce 2 est constituée on un matériau relativement dur.

2. Procédé d'étanchéification selon la revendication 1, caractérisé en ce que le joint 5 et la pièce 7 en matériau relativement souple ou 〈〈 mou 〉〉 sont suffisamment déformés au serrage pour que les défauts de surface se comblent ou s'écrasent.

3. Procédé d'étanchéification selon la revendication 1 ou 2, caractérisé on ce que le joint 5 et la pièce 7 appliquée sur le joint en contact plan sur plan sont réalisés en le même matérieau

4. Procédé d'étanchéification selon la revendication 3, caractérisé on ce que le matériau constitutif du joint 5 et de la pièce 7 est un PTFE.

5. Procédé d'étanchéification selon la revendication 3, caractérisé en ce que le matériau constitutif du joint 5 et la pièce 7 est un polymère ou un métal ou alliage relativement mou comparativement au matériau utilisé pour la pièce 2.

6. Procédé d'étanchéification selon l'une quelconque des revendications 1 à 5, caractérisé on ce que le matériau constitutif de la pièce 2 est un PFA.

7. Procédé d'étanchéification selon l'une quelconque des revendications 1 à 5, caractérisé en ce que le matériau constitutif de la pièce 2 est un polymère ou un métal relativement dur comparativement au matériau utilisé pour les pièces 5 et 7.

8. Procédé d'étanchéification selon la revendication 4, caractérisé en ce que le matériau constitutif du joint 5 et de la pièce 7 est un PTFE commercialisé par Du Pont de Nemours sous le nom Teflon PTFE (TM), ou par AUSIMONT sous le nom ALGOFLON (TM)..

9. Procédé d'étanchéification selon la revendication 6, caractérisé en ce que le matériau constitutif de la pièce 2 est un PFA commercialisé par Du Pont de Nemours sous le nom Teflon PFA (TM).

10. Procédé d'étanchéification selon l'une quelconque des' revendications 1 à 9, caractérisé en ce que le joint 5 est une rondelle de section sensiblement carrée ou rectangulaire, qui comporte du côté 〈〈 intérieur 〉〉 INT. une fente f qui s'ouvre sur l'INT. en ménageant une languette 10 dans le joint 5, du côté de la pièce d'appui 7.

11. Procédé d'étanchéification selon la revendication 10, caractérisé en ce que la longueur l de la fente f représentera environ de 1/3 à 2/3 de la largeur totale a de la rondelle 5, de manière particulièrement préférée environ 2/3.

12. Procédé d'étanchéification selon l'une quelconque des revendications 10 ou 11, caractérisé en ce que si le fluide s'insère entre la pièce 2 (50) et le joint 5 (20), il pénètre sous pression dans la fente f et donc exerce une pression sur la languette 10 du joint 5 et applique donc avec encore plus de force la face 30 du joint contre la face 40 de la pièce 7, renforçant ainsi encore l'étanchéité plan sur plan, la fente f jouant donc le rôle d'une seconde sécurité.

13. Procédé d'étanchéification selon l'une quelconque des revendications 10 à 12, caractérisé en ce que la languette 10 du joint 5 comporte une partie 60 légèrement protubérante vers l'INT., c'est à dire que la partie 60 dépasse légèrement vers l' INT. la face 20 INT. du joint.

14. Procédé d'étanchéification selon la revendication 13, caractérisé en ce que la partie 50 de la pièce 2 va serrer la languette 10, par son extrémité protubérante 60, contre la face 40 de la pièce 7.

15. Procédé d'étanchéification selon la revendication 14, caractérisé en ce que le serrage de l'extrémité 60 maintient la fente f ouverte et favorise donc la pénétration du fluide dans ladite fente.

16. Joint d'étanchéification entre une pièce 2 comportant un logement contenant ledit joint et une pièce d'appui 7 appliquée contre ledit joint, caractérisé en ce que ledit joint est de section sensiblement carrée ou rectangulaire et on réalise un contact plan sur plan entre la face 30 du joint et la face 40 de la pièce 7 venant au regard de la face 30, et en ce que le joint 5 et la pièce 7 appliquée sont constitués en un matériau relativement souple ou 〈〈 mou 〉〉.

17. Joint d'étanchéification selon la revendication 16, caractérisé en ce que le joint 5 est suffisamment déformable au serrage pour que les défauts de surface se comblent ou s'écrasent

18. Joint d'étanchéification salon la revendication 16 ou 17, caractérisé on ce que le matériau constitutif est un PTFE.

19. Joint d'étanchéification selon la revendication 15 ou 16, caractérisé on ce que le matériau constitutif est un polymère ou un métal ou alliage relativement mou comparativement au matériau utilisé pour la pièce 2.

20. Joint d'étanchéification selon la revendication 15 ou 16, caractérisé en ce que le matériau constitutif on est un PTFE commercialisé par Du Pont de Nemours sous le nom Teflon PTFE (TM), ou par AUSIMONT sous le nom ALGOFLON (TM).

21. Joint d'étanchéification selon l'une quelconque des revendications 16 à 20, caractérisé en ce qu'il est constitué d'une rondelle de section sensiblement carrée ou rectangulaire, qui comporte du côté 〈〈 intérieur 〉〉 INT. une fente f qui s'ouvre sur l'INT. en ménageant une languette 10 dans le joint 5, du côté de la pièce d'appui 7.

22. Joint d'étanchéification selon la revendication 21, caractérisé en ce que la longueur l de la fente f représentera environ de 1/3 à 2/3 de la largeur totale a de la rondelle 5, de manière particulièrement préférée environ 2/3.

23. Joint d'étanchéification selon la revendication 21 ou 22, caractérisé en ce que la languette 10 du joint 5 comporte une partie 60 légèrement protubérante vers l'INT., c'est à dire que la partie 60 dépasse légèrement vers l' INT. la face 20 INT. du joint.

24. Applications du procédé et du joint selon l'une quelconque des revendications 1 à 23 dans les industries des semi-conducteurs, l'industrie électronique de manière générale, l'aéronautique et l'espace, l'industrie pharmaceutique, la chimie.

25. Pompes destinées à véhiculer des fluides spéciaux, on particulier des fluides corrosifs, et/ou on particulier des fluides ne devant pas être contaminés par le joint d'étanchéité, caractérisées en ce qu'elles comportent au moins un joint d'étanchéité selon l'une quelconque des revendications 16 à 23.

26. Pompes destinées à véhiculer des fluides spéciaux, en particulier des fluides corrosifs, et/ou en particulier des fluides ne devant pas être contaminés par le joint d'étanchéité, selon la revendication 25, caractérisées en ce que le système d'étanchéité de la pompe est formé par un joint 5 placé dans un logement 4 ménagé dans le corps de pompe 2 et serré contre la collerette 7 du soufflet 3 de la pompe.

27. Pompes selon la revendication 26 caractérisées en ce que le joint 5 est constitué d'une rondelle de section sensiblement carrée ou rectangulaire, qui comporte du côté 〈〈 intérieur 〉〉 INT. une fente f qui s'ouvre sur l'INT. en ménageant une languette 10 dans le joint 5, du côté de la pièce d'appui 7.

28. Pompes selon la revendication 27 caractérisées en ce que la longueur l de la fente f représentera environ de 1/3 à 2/3 de la largeur totale a de la rondelle 5, de manière particulièrement préférée environ 2/3.

29. Pompes selon la revendication 27 ou 28 caractérisées en ce que la languette 10 du joint 5 comporte une partie 60 légèrement protubérante vers l'INT., c'est à dire que la partie 60 dépasse légèrement vers l' INT. la face 20 INT. du joint.

30. Applications des pompes selon l'une quelconque des revendications 25 à 29 dans les industries des semi-conducteurs, l'industrie électronique de manière générale, l'aéronautique et l'espace, l'industrie pharmaceutique, la chimie.

31. Joint selon l'une quelconque des revendications 16 à 23 caractérisé en ce que l'épaisseur ep de la languette 10 du joint 5 est suffisamment fine pour être souple et déformable.

32. Procédé selon l'une quelconque des revendications 1 à 15, caractérisé en ce que
- les valeurs de résistance à la compression au seuil d'écoulement selon la norme ASTM D 695 sont respectivement de:
24 MPa pour le Teflon PFA (TM) et de 12 MPa pour le Teflon PTFE (TM);
- les valeurs de dureté Shore D selon la norme ASTM D 2240 sont respectivement de:
60 pour le Teflon PFA (TM) et de 55 pour le Teflon PTFE (TM).
- une FEP (résine fluor éthylène-propylène) présente une résistance à la compression de 15,2 MPa et une dureté Shore de 56 - 57, selon les mêmes normes.

33. Joint selon l'une quelconque des revendications 16 à 23 et 31, caractérisé en ce que
- les valeurs de résistance à la compression au seuil d'écoulement selon la norme ASTM D 695 sont respectivement de:
24 MPa pour le Teflon PFA (TM) et de 12 MPa pour le Teflon PTFE (TM);
- les valeurs de dureté Shore D selon la norme ASTM D 2240 sont respectivement de:
60 pour le Teflon PFA (TM) et de 55 pour le Teflon PTFE (TM).
- une FEP (résine fluor éthylène-propylène) présente une résistance à la compression de 15,2 MPa et une dureté Shore de 56 - 57, selon les mêmes normes.
